# FASCICULE DE BREVET EUROPEEN

(11) **EP 4 371 315 B1**
(45) Date de publication et mention de la délivrance du brevet: **25.06.2025**
(21) Numéro de dépôt: 22754469.9
(22) Date de dépôt: 12.07.2022
(51) Int. Cl.: H04W 4/021, G01S 5/02, H04W 24/00, H04W 64/00, G06F 21/62, H04L 41/14

(54) **DISPOSITIF DE COMPTAGE ET PROCÉDÉ CORRESPONDANT**
ZÄHLVORRICHTUNG UND ENTSPRECHENDES VERFAHREN
COUNTING DEVICE AND CORRESPONDING METHOD

(30) Priorité: 13.07.2021 FR 2107585
(43) Date de publication de la demande: 22.05.2024
(73) Titulaire: Intersec, 92085 Paris La Defense Cedex (FR)
(72) Inventeur: COÏC, Jean-Marc, 92085 Paris La Defense Cedex (FR)
(74) Mandataire: Cabinet Netter
(86) Numéro de dépôt international: PCT/FR2022/051404
(87) Numéro de publication internationale: WO 2023/285765

(56) Documents cités:
- CN-A- 104 217 244

## Description

L'invention concerne le domaine des télécommunications mobiles, et plus particulièrement la nécessité de pouvoir analyser la présence de personnes dans des zones prédéterminées tout en préservant leur anonymat.

En effet, dans le cadre des alertes aux populations en cas d'incidents graves comme mineurs, les autorités publiques souhaitent tout d'abord communiquer aux populations pour avertir d'un danger et communiquer les instructions à suivre. Cette communication peut avoir lieu par l'intermédiaire de divers canaux de communications, sur téléphone mobile par exemple.

Lorsque cette communication demande à quitter une zone de danger, les autorités n'ont pas de visibilité sur les effets de la communication d'alerte. Un des objets de l'invention est de permettre aux autorités un suivi des mouvements de population pour évaluer l'impact d'une alerte et éventuellement décider d'actions supplémentaires.

Dans le cadre des alertes aux populations, les autorités disposent d'une plate-forme centrale pour piloter les alertes. Cette plate-forme est typiquement connectée à différentes plates-formes chez chaque opérateur pour effectuer les communications et les calculs de dénombrement de population. Ceci permet de préserver la vie privée des abonnés de chaque réseau, puisque la plate-forme centrale ne connait pas les positions individuelles des abonnés : elle se contente de donner des ordres de diffusions de messages en transmettant un message et une zone ciblée, et ce sont les plates-formes chez les opérateurs qui sont responsables d'identifier les mobiles concernés et d'envoyer les communications vers ces mobiles.

Ce besoin peut également se faire ressentir en cas de situation de crise de type attentat, pour bénéficier d'estimations sur le nombre de personnes actuellement dans un lieu donné. Dans un autre contexte, celui de la publicité géolocalisée, l'invention permet d'anticiper les effets d'une communication ciblée dans une zone donnée, afin de donner des moyens d'étendre ou de réduire la zone ciblée pour s'adapter à des objectifs ou à un budget.

Dans tous ces cas, il n'est pas nécessaire de connaître la liste explicite des personnes présentes dans un lieu donné, mais seulement leur nombre approximatif.

Les seules solutions connues pour adresser ce genre de problématiques reposent sur l'utilisation d'une méthode de type k-anonymity. C'est par exemple le cas de la demande de brevet US20150007341A1 qui applique cette méthode d'anonymisation à des services de localisation à la demande. Cependant, cette approche ne peut pas être transposée à l'anonymisation de flux d'événements de localisation. Le document CN 104 217 244 décrit un dispositif selon le préambule de la revendication 1.

L'invention vient améliorer la situation. À cet effet, elle propose un dispositif de comptage comprenant une mémoire agencée pour recevoir un ensemble de données de zones géographiques formant ensemble un maillage d'un espace géographique, des données de cellule de localisation de téléphonie mobile associant un identifiant de cellule de localisation, un emplacement de cellule de localisation et une couverture géographique de cellule de localisation, un anonymiseur agencé pour déterminer pour une cellule de localisation donnée une ou plusieurs zones géographiques chevauchant la couverture géographique de la cellule de localisation donnée, et pour calculer pour chaque zone géographique un quantum de détection, et un compteur agencé pour recevoir des données de signalisation de téléphonie mobile associant à chaque fois un identifiant de téléphonie mobile, un identifiant de cellule de localisation et un marqueur de temps, et pour déterminer, pour une plage de temps donnée, un comptage de dispositifs de téléphonie mobile pour chaque zone géographique à partir des données de signalisation de téléphonie mobile et du ou des quantums de détection associés à chaque zone géographique. L'anonymiseur est agencé pour modifier la couverture géographique de chaque cellule de localisation donnée en déterminant un rayon effectif à partir de la densité de cellules de localisation autour de la cellule de localisation donnée.

Ce dispositif est particulièrement avantageux car il permet d'obtenir un comptage localisé suffisamment précis tout en respectant un cadre donné par les directives de protection de la vie privée les plus strictes.

Selon divers modes de réalisation, l'invention peut présenter une ou plusieurs des caractéristiques suivantes :
- l'anonymiseur est agencé, pour une cellule de localisation donnée, pour associer un quantum de détection égal à 1 à une zone géographique qui contient l'antenne de la cellule de localisation, ou qui contient le barycentre estimé de la couverture géographique de la cellule de localisation pondérée par la puissance de transmission, et un quantum de détection égal à 0 pour les autres zones géographiques,
- l'anonymiseur est agencé, pour une cellule de localisation donnée, pour déterminer un rapport respectif entre une surface de chevauchement entre chaque zone géographique respective et la couverture géographique de la cellule de localisation donnée et la surface de la couverture géographique de la cellule de localisation donnée, et pour affecter à chaque zone géographique respective un quantum de détection égal au rapport respectif.
- l'anonymiseur est agencé, pour une cellule de localisation donnée, pour modifier la couverture géographique sous la forme d'un lobe sensiblement ovale principal et d'un lobe sensiblement ovale secondaire, tous deux présentant une extrémité au niveau de l'antenne de la cellule de localisation et étant sensiblement symétriques par rapport à un axe principal d'émission de cette antenne, et tels que le lobe principal est disposé du côté d'émission principal de cette antenne et est plus grand que le lobe secondaire, pour déterminer un rapport respectif entre une surface de chevauchement entre chaque zone géographique respective et la couverture géographique modifiée et la surface de la couverture géographique modifiée, et pour affecter à chaque zone géographique respective un quantum de détection égal au rapport respectif,
- l'anonymiseur est agencé, pour une cellule de localisation donnée, pour déterminer le quantum de détection de chaque zone géographique respective à partir d'une ou plusieurs distributions de présence probabiliste caractérisant la distance et/ou l'angle de la zone géographique respective par rapport à la couverture géographique de la cellule de localisation donnée,
- l'anonymiseur est agencé pour déterminer deux gaussiennes, chacune selon un axe respectif de l'espace géographique et avec des paramètres dépendant de la couverture géographique de la cellule de localisation donnée, et pour déterminer le quantum de détection de chaque zone géographique respective en faisant le produit de ces gaussiennes appliquées avec les coordonnées du centre de chaque zone géographique respective,
- l'anonymiseur est agencé pour déterminer deux gaussiennes, chacune selon un axe respectif de l'espace géographique et avec des paramètres dépendant de la couverture géographique de la cellule de localisation donnée, et pour déterminer le quantum de détection de chaque zone géographique respective en faisant le produit de l'intégrale de ces gaussiennes sur la portion de chaque zone géographique respective chevauchant la couverture géographique de la cellule de localisation donnée,
- l'anonymiseur est agencé pour déterminer une gaussienne avec des paramètres dépendant de la couverture géographique de la cellule de localisation donnée, et pour déterminer le quantum de détection de chaque zone géographique respective en faisant calculant la valeur de la gaussienne avec la distance entre le centre de chaque zone géographique respective et l'antenne de la cellule de localisation donnée, et en normalisant les quantums de détection résultants de sorte que leur somme vaut 1,
- le compteur est agencé pour déterminer une valeur de comptage pour chaque zone géographique à partir de la somme, pour chaque cellule de localisation dont la couverture géographique chevauche cette zone géographique, du produit du quantum de détection de cette zone géographique pour cette cellule de localisation par le nombre d'identifiants de dispositifs de téléphonie mobile uniques dans cette cellule de localisation donnée sur une période de temps choisie.

L'invention concerne également un procédé de comptage comprenant :
a) recevoir un ensemble de données de zones géographiques formant ensemble un maillage d'un espace géographique, des données de cellule de localisation de téléphonie mobile associant un identifiant de cellule de localisation, un emplacement de cellule de localisation et une couverture géographique de cellule de localisation, et déterminer pour une cellule de localisation donnée une ou plusieurs zones géographiques chevauchant la couverture géographique de la cellule de localisation donnée, la couverture géographique de chaque cellule de localisation donnée étant modifiée en déterminant un rayon effectif à partir de la densité de cellules de localisation autour de la cellule de localisation donnée, et pour calculer pour chaque zone géographique un quantum de détection,
b) recevoir des données de signalisation de téléphonie mobile associant à chaque fois un identifiant de téléphonie mobile, un identifiant de cellule de localisation et un marqueur de temps, et pour déterminer, pour une plage de temps donnée, un comptage de dispositifs de téléphonie mobile pour chaque zone géographique à partir des données de signalisation de téléphonie mobile et du ou des quantums de détection associés à chaque zone géographique.

Selon diverses variantes, ce procédé peut comporter une ou plusieurs des caractéristiques suivantes :
- l'opération a) comprend déterminer un rapport respectif entre une surface de chevauchement entre chaque zone géographique respective et la couverture géographique de la cellule de localisation donnée et la surface de la couverture géographique de la cellule de localisation donnée, et affecter à chaque zone géographique respective un quantum de détection égal au rapport respectif,
- l'opération a) comprend modifier la couverture géographique sous la forme d'un lobe sensiblement ovale principal et d'un lobe sensiblement ovale secondaire, tous deux présentant une extrémité au niveau de l'antenne de la cellule de localisation et étant sensiblement symétriques par rapport à un axe principal d'émission de cette antenne, et tels que le lobe principal est disposé du côté d'émission principal de cette antenne et est plus grand que le lobe secondaire, pour déterminer un rapport respectif entre une surface de chevauchement entre chaque zone géographique respective et la couverture géographique modifiée et la surface de la couverture géographique modifiée, et affecter à chaque zone géographique respective un quantum de détection égal au rapport respectif,
- l'opération a) comprend déterminer le quantum de détection de chaque zone géographique respective à partir d'une ou plusieurs distributions de présence probabiliste caractérisant la distance et/ou l'angle de la zone géographique respective par rapport à la couverture géographique de la cellule de localisation donnée.

L'invention concerne enfin un programme comprenant des instructions mettre en œuvre le dispositif selon l'invention ou pour exécuter le procédé selon l'invention lorsque ledit programme d'ordinateur est exécuté sur un ordinateur.

D'autres caractéristiques et avantages de l'invention apparaîtront mieux à la lecture de la description qui suit, tirée d'exemples donnés à titre illustratif et non limitatif, tirés des dessins sur lesquels :
- [Fig.1] représente un diagramme générique d'un dispositif selon l'invention,
- [Fig.2] représente un exemple de cellules de localisation mises en œuvre par le dispositif de la figure 1,
- [Fig.3] représente un exemple de zones géographiques mises en œuvre par le dispositif de la figure 1,
- [Fig.4] représente un géorepérage mis en œuvre par le dispositif de la figure 1, et
- [Fig.5] représente un exemple de modélisation d'une cellule de localisation.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

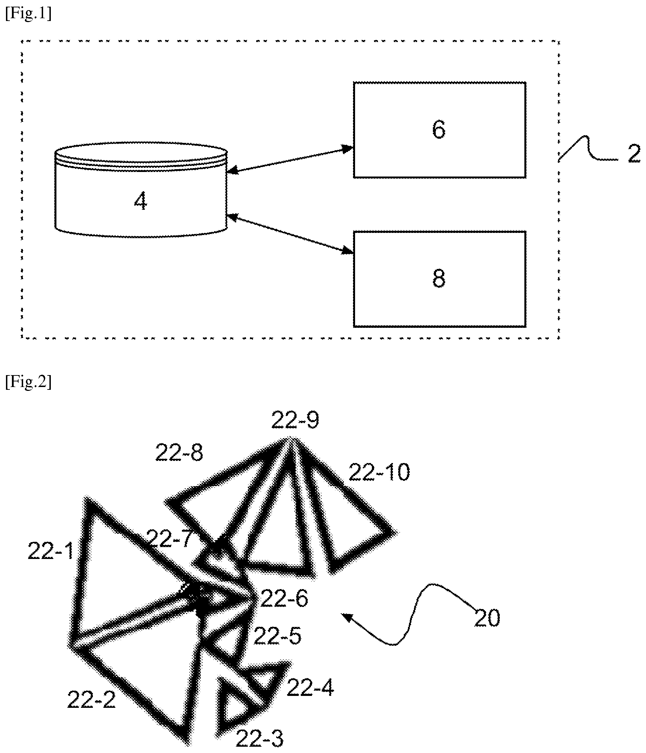

La figure 1 représente un diagramme générique d'un dispositif 2 selon l'invention. Le dispositif 2 comprend une mémoire 4, un anonymiseur 6 et un compteur 8.

La philosophie globale de l'invention est la suivante. Pour pouvoir compter sur la base d'un géorepérage (« geofencing » en anglais) de manière anonymisée, on peut utiliser les données de signalisation des dispositifs de téléphonie mobile. En effet, chaque dispositif communique de manière régulière avec des antennes pour être connecté au réseau. Ces antennes ont une portée géographique connue des opérateurs, et des données de signalisation indiquant qu'un dispositif donné communique avec une antenne donnée permettent donc de le localiser dans cette cellule. La couverture d'une antenne est également connue sous le terme cellule de localisation.

Pour autant, il n'est pas souhaitable d'utiliser ces données, car elles identifient de manière totale les personnes par leur identifiant de dispositif de téléphonie mobile. La Demanderesse a donc eu l'idée de croiser la couverture géographique des cellules de localisation avec un maillage géographique arbitraire. Ainsi, il devient possible d'anonymiser le comptage puisqu'on va chercher à déterminer le nombre de dispositifs mobiles dans une ou plusieurs zones géographiques de ce maillage.

Afin de préserver un comptage précis, il faut donc établir une correspondance entre chaque cellule de localisation et la ou les zones géographiques que sa couverture géographique chevauche. Par exemple, la figure 2 représente un exemple de réalisation dans lequel un espace géographique 20 que le dispositif 2 vise à surveiller est couvert par 10 cellules de localisation distinctes référencées 22-1 à 22-10.

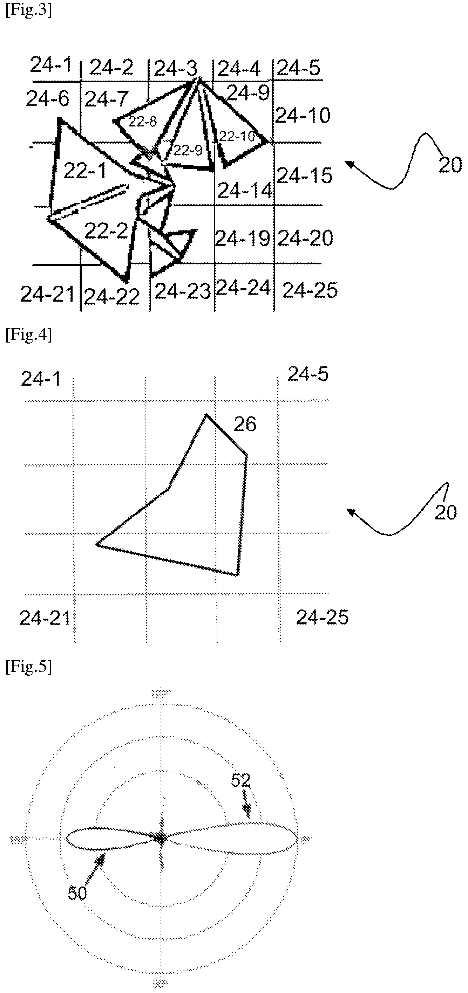

Comme expliqué ci-dessus, le dispositif 2 vient dans un premier temps associer les cellules de localisation 22-1 à 22-10 à un maillage de l'espace géographique 20 avec des zones géographiques référencées 24-1 à 24-25. Dans l'exemple représenté sur la figure 3, ce maillage est sous la forme d'une grille à mailles carrées, mais il va de soi que de nombreux autres maillages pourront être envisagés, par exemple en utilisant les communes ou autrement.

Ainsi, à titre d'exemple, la cellule 22-1 chevauche les zones géographiques 24-6, 24-7, 24-11 , 24-12 et 24-16. Cela signifie que, lorsque des données de signalisation associent un dispositif de téléphonie mobile à la cellule de localisation 22-1, celui-ci est susceptible d'être dans l'une des zones géographiques 24-6, 24-7, 24-11, 24-12 et 24-16.

Pour refléter cette probabilité, l'invention propose d'affecter un quantum de détection à chaque zone géographique qui est chevauchée par la couverture géographique d'une cellule de localisation donnée. Ainsi, il devient possible d'ignorer les identifiants des dispositifs mobiles et de compter les évènements uniques dans une cellule de localisation donnée, et de propager ce comptage à chaque zone géographique chevauchante par son quantum de détection.

Il est ainsi possible de se retrouver avec des nombres entre 0 et 1 pour le comptage même après avoir sommé la contribution de chaque cellule de localisation sur une zone géographique donnée. Mais cela n'est pas gênant car il faut ensuite optionnellement ajouter le compte de tous les opérateurs, puis redresser le comptage déterminé. Ainsi, on pourra utiliser un facteur de pénétration mobile et un facteur d'extinction, par exemple, 110% de pénétration mobile, mais 95% des téléphones allumés en permanence. En variante, ces facteurs pourront varier en fonction de chaque zone géographique, afin de tenir compte du fait que la pénétration mobile varie sur le territoire.

Ensuite, comme représenté sur la figure 4, il devient possible de tracer une zone arbitraire 26 sur l'espace géographique 20, et le comptage sera déterminé en calculant le recouvrement de ce géorepérage avec chaque zone géographique et en sommant les comptages de chaque zone géographique pondérée par ce recouvrement.

Ici encore, d'autres techniques pourront être utilisées pour le comptage avec géorepérage, aussi bien en fonction du type de maillage que d'autres spécificités. Par exemple, si l'on sait qu'une zone géographique donnée comprend un couloir, et que les personnes ne peuvent pas être ailleurs que dans ce couloir, alors le recouvrement pourra être considéré comme total pour cette zone géographique, même si cela n'est pas le cas d'un point de vue strictement géographique.

Il apparaît qu'il sera avantageux de choisir un maillage dont la résolution est suffisamment fine pour conserver une bonne précision lors de l'estimation du dénombrement sur un géorepérage. De même, la taille des zones géographiques sera de manière préférée adaptée à la couverture géographique des cellules de localisation afin de conserver une précision suffisante sur chaque zone géographique.

Il est également possible de définir plusieurs maillages afin d'adapter la résolution en fonction de la densité de population réelle : par exemple, avoir une grille de 200m x 200m sur Paris, mais seulement 1000m x 1000m en zone rurale. Pour faciliter le passage d'un niveau de grille à un autre, il sera utile d'aligner les grilles. Par exemple, la grille de 200m x 200m peut être agencée pour correspondre à un redécoupage des cases de la grille en 1000m x 1000m couvrant Paris.

Ainsi, il apparaît que la mémoire 4 reçoit toutes les données nécessaires au fonctionnement du dispositif 2, qu'elles soient temporaires ou pas. Ainsi, la mémoire 4 reçoit les données définissant les zones géographiques, c'est-à-dire les informations permettant de les définir dans l'espace géographique (par exemple, avec les coordonnées du coin nord-ouest, et le côté du carré pour une grille à maillage carré, etc.) et d'identifier chaque zone géographique. De manière similaire, la mémoire 4 reçoit les données relatives aux cellules de localisation, qui comprennent typiquement un identifiant de cellule de localisation et une couverture géographique de cellule de localisation (là encore, la couverture peut être définie de nombreuses manières, il s'agit de positionner de manière absolue la cellule de localisation et sa couverture de signal dans l'espace géographique concerné). En variante, les données de cellule de localisation peuvent comprendre une ou plusieurs des données évoquées plus bas pour calculer les quantums de détection. Bien évidemment, la mémoire 4 reçoit également les quantums de détection qui associent une cellule de localisation donnée et une zone géographique donnée. La mémoire 4 reçoit également toutes les données temporaires, ainsi que les données d'entrée formées par les données de signalisation de téléphonie mobile, ainsi que les données de comptage par zone géographique qui en résultent. Enfin, la mémoire 4 peut également recevoir des données de géorepérage définissant une zone arbitraire de l'espace géographique utilisée en conjonction avec le comptage des zones géographiques pour déterminer un comptage pour une zone spécifique.

Les données reçues par la mémoire 4 peuvent avantageusement être horodatées, de sorte que les comptages peuvent être suivis dans le temps. Cela permet de pouvoir afficher les données de comptage en temps réel, et à des dates et heures arbitraires dans le passé. Il est donc avantageux de stocker dans la mémoire 4 le dernier comptage connu dans une base de données à part pour pouvoir requêter facilement sur le dernier état connu.

Les comptages historisés permettent également de calculer les comptages moyens par case sur les 6 dernières semaines (en prenant la valeur du même jour de semaine sur le même créneau horaire). Il va de soi que la durée de cet historique pourra varier et être ramenée à quelques jours ou au contraire plusieurs mois. Cela permet de représenter l'information de différence avec la normale en plus du comptage "brut". Cette différence à la normale permet de visualiser rapidement les situations en cours, dans des zones avec des comptes beaucoup plus élevés ou beaucoup moins élevés que d'habitude le même jour au même créneau horaire. Pour calculer la moyenne mobile, il est utile de supprimer les valeurs minimales et maximales pour éviter de compter l'influence d'événements ponctuels.

Dans l'exemple décrit ici, la mémoire 4 est décrit comme un seul élément, mais elle pourrait être répartie en plusieurs éléments. Elle peut être réalisé par tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif peuvent être stockées sur tout type de mémoire similaire à la mémoire 4, ou sur celle-ci. Ces données peuvent être effacées après que le dispositif a effectué ses tâches ou conservées.

L'anonymiseur 6 et le compteur 8 sont des éléments accédant directement ou indirectement à la mémoire 4. Ils peuvent être réalisés sous la forme d'un programme ou code informatique approprié exécuté sur un ou plusieurs processeurs. Par processeurs, il doit être compris tout processeur adapté au calcul de projection de textures sur des plans et de traitements liés aux voxels. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille ou dans un cloud, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée.

L'anonymiseur 6 a pour fonction la détermination des quantums de détection pour chaque cellule de localisation.

Lorsque la couverture géographique d'une cellule de localisation est entièrement contenue dans une zone géographique, alors le quantum de détection de cette zone géographique est fixé à 1.

Pour le cas où la couverture géographique d'une cellule de localisation présente un chevauchement avec plusieurs zones géographiques, les travaux de la Demanderesse lui ont montré que plusieurs solutions peuvent être utilisées pour déterminer les quantums de détection.

La première solution consiste à associer un quantum de détection égal à 1 pour une unique zone géographique, et 0 pour toutes les autres. La zone géographique peut être choisie comme celle qui contient l'antenne de la cellule de localisation, ou en variante la zone géographique qui contient le barycentre estimé de la couverture de l'antenne de la cellule de localisation. Cette première solution est une approche simpliste qui ne donne pas les meilleurs résultats.

Une deuxième solution consiste à déterminer, pour chaque zone géographique, quel est le taux de chevauchement avec la couverture géographique par rapport à celle-ci, et à affecter comme quantum de détection ce rapport. En variante, comme représenté sur la figure 5, la couverture géographique de la cellule de localisation peut être modifiée pour prendre la forme d'un lobe sensiblement ovale principal 52 et d'un lobe sensiblement ovale secondaire 50, tous deux présentant une extrémité au niveau de l'antenne de la cellule de localisation et étant sensiblement symétriques par rapport à un axe principal d'émission de cette antenne, et tels que le lobe principal est disposé du côté d'émission principal de cette antenne et est plus grand que le lobe secondaire. Cette solution est plus réaliste en ce sens qu'elle représente un peu plus précisément la couverture réelle de chaque cellule de localisation.

Une troisième solution consiste à définir le quantum de détection en fonction d'une distribution de présence probabiliste, par exemple en utilisant une ou plusieurs fonctions gaussiennes pouvant dépendre de la distance à la cellule et/ou de l'angle par rapport à l'orientation de la cellule. En variante, les fonctions gaussiennes pourraient être remplacées par des fonctions tirées de la loi Gamma. D'une manière générale, toute fonction associée à une loi ressemblant à une probabilité de présence pourrait trouver une application.

Selon une première variante, le quantum de détection est déterminé au centre de chaque zone géographique jusqu'à une certaine distance (typiquement le rayon de la cellule de localisation, ou une partie de celui-ci, par exemple 75%), et on attribue le comptage en fonction du poids relatif de chaque case couverte. Par exemple, le quantum de détection peut être déterminé par le produit de deux gaussiennes, chacune selon un axe de l'espace géographique, les paramètres de ces gaussiennes dépendant de chaque cellule de localisation.

Selon une deuxième variante plus simple, le quantum de détection est déterminé sur la base d'une unique gaussienne, dépendant seulement de la distance entre le centre de la zone géographique et l'antenne de la cellule de localisation, les quantums de détection étant normalisés de sorte que leur somme vaut 1.

Selon une troisième variante plus précise, le quantum de détection est déterminé à partir de l'intégrale sur chaque zone géographique de deux gaussiennes, chacune selon un axe de l'espace géographique, les paramètres de ces gaussiennes dépendant de chaque cellule de localisation.

L'anonymiseur 6 peut également modifier la couverture géographique de chaque cellule de localisation pour tenir compte de l'hypothèse raisonnable qu'un dispositif de téléphonie mobile se connecte prioritairement sur les cellules de localisation les plus proches. Ainsi, il convient de définir un rayon effectif qui est proportionnel à l'inverse de la racine carrée de la densité de cellules de localisation. Cette densité peut être estimée de manière itérative, en partant d'une petite surface centrée sur la cellule, puis en étendant cette surface de manière incrémentielle jusqu'à trouver un nombre choisi cellules de localisation chevauchant cette surface ou bien jusqu'à une limite de surface soit atteinte. Dans cet exemple, la densité est à chaque itération proportionnelle à l'inverse de la surface, et la densité retenue est celle de la dernière itération. Toujours en variante, la densité peut également tenir compte de l'ouverture numérique des antennes des cellules de localisation prises en compte pour la surface.

Une fois les quantums de détection déterminés par l'anonymiseur 6, le compteur 8 peut opérer en sommant, sur une période de temps choisie, tous les quantums de détection de chaque couple (zone géographique ; cellule de localisation) multipliés respectivement par le nombre d'identifiants uniques de dispositif mobile dans chaque cellule de localisation durant cette période de temps. Ainsi, si une zone géographique donnée présente un recouvrement avec quatre cellules de localisation distinctes, c'est la somme des quatre produits du quantum de détection pour chaque cellule de localisation respective par le nombre d'identifiants uniques de la cellule de localisation respective qui donne le comptage pour cette zone géographique.

Ensuite, le compteur 8 peut de manière optionnelle et préférée exécuter un redressage, en sommant les comptages de tous les opérateurs couvrant une zone géographique donnée, et en appliquant un facteur de pénétration mobile et un facteur d'extinction, par exemple, 110% de pénétration mobile, mais 95% des téléphones allumés en permanence.

Enfin, si un géorepérage a été dessiné sur le maillage des zones géographiques, le comptage final peut être calculé en appliquant au comptage de chaque zone géographique un taux de recouvrement avec ce géorepérage. Ce taux peut optionnellement dépendre de paramètres géographiques particuliers à chaque zone géographique, qui par exemple pourraient amener à fixer un taux à 1 même si le chevauchement est partiel, ou au contraire le baisser malgré un chevauchement important.

## Revendications

1. Dispositif de comptage comprenant une mémoire (4) agencée pour recevoir un ensemble de données de zones géographiques formant ensemble un maillage d'un espace géographique, des données de cellule de localisation de téléphonie mobile associant un identifiant de cellule de localisation, un emplacement de cellule de localisation et une couverture géographique de cellule de localisation, un anonymiseur (6) agencé pour déterminer pour une cellule de localisation donnée une ou plusieurs zones géographiques chevauchant la couverture géographique de la cellule de localisation donnée, et pour calculer pour chaque zone géographique un quantum de détection, et un compteur (8) agencé pour recevoir des données de signalisation de téléphonie mobile associant à chaque fois un identifiant de téléphonie mobile, un identifiant de cellule de localisation et un marqueur de temps, et pour déterminer, pour une plage de temps donnée, un comptage de dispositifs de téléphonie mobile pour chaque zone géographique à partir des données de signalisation de téléphonie mobile et du ou des quantums de détection associés à chaque zone géographique, **caractérisé en ce que** l'anonymiseur (6) est agencé pour modifier la couverture géographique de chaque cellule de localisation donnée en déterminant un rayon effectif à partir de la densité de cellules de localisation autour de la cellule de localisation donnée.

2. Dispositif de comptage selon la revendication 1 dans lequel l'anonymiseur (6) est agencé, pour une cellule de localisation donnée, pour associer un quantum de détection égal à 1 à une zone géographique qui contient l'antenne de la cellule de localisation, ou qui contient le barycentre estimé de la couverture géographique de la cellule de localisation pondérée par la puissance de transmission, et un quantum de détection égal à 0 pour les autres zones géographiques.

3. Dispositif de comptage selon la revendication 1 dans lequel l'anonymiseur (6) est agencé, pour une cellule de localisation donnée, pour déterminer un rapport respectif entre une surface de chevauchement entre chaque zone géographique respective et la couverture géographique de la cellule de localisation donnée et la surface de la couverture géographique de la cellule de localisation donnée, et pour affecter à chaque zone géographique respective un quantum de détection égal au rapport respectif.

4. Dispositif selon la revendication 1, dans lequel l'anonymiseur (6) est agencé, pour une cellule de localisation donnée, pour modifier la couverture géographique sous la forme d'un lobe sensiblement ovale principal et d'un lobe sensiblement ovale secondaire, tous deux présentant une extrémité au niveau de l'antenne de la cellule de localisation et étant sensiblement symétriques par rapport à un axe principal d'émission de cette antenne, et tels que le lobe principal est disposé du côté d'émission principal de cette antenne et est plus grand que le lobe secondaire, pour déterminer un rapport respectif entre une surface de chevauchement entre chaque zone géographique respective et la couverture géographique modifiée et la surface de la couverture géographique modifiée, et pour affecter à chaque zone géographique respective un quantum de détection égal au rapport respectif.

5. Dispositif de comptage selon la revendication 1 dans lequel l'anonymiseur (6) est agencé, pour une cellule de localisation donnée, pour déterminer le quantum de détection de chaque zone géographique respective à partir d'une ou plusieurs distributions de présence probabiliste caractérisant la distance et/ou l'angle de la zone géographique respective par rapport à la couverture géographique de la cellule de localisation donnée.

6. Dispositif de comptage selon la revendication 5, dans lequel l'anonymiseur (6) est agencé pour déterminer deux gaussiennes, chacune selon un axe respectif de l'espace géographique et avec des paramètres dépendant de la couverture géographique de la cellule de localisation donnée, et pour déterminer le quantum de détection de chaque zone géographique respective en faisant le produit de ces gaussiennes appliquées avec les coordonnées du centre de chaque zone géographique respective.

7. Dispositif de comptage selon la revendication 5, dans lequel l'anonymiseur (6) est agencé pour déterminer deux gaussiennes, chacune selon un axe respectif de l'espace géographique et avec des paramètres dépendant de la couverture géographique de la cellule de localisation donnée, et pour déterminer le quantum de détection de chaque zone géographique respective en faisant le produit de l'intégrale de ces gaussiennes sur la portion de chaque zone géographique respective chevauchant la couverture géographique de la cellule de localisation donnée.

8. Dispositif de comptage selon la revendication 5, dans lequel l'anonymiseur (6) est agencé pour déterminer une gaussienne avec des paramètres dépendant de la couverture géographique de la cellule de localisation donnée, et pour déterminer le quantum de détection de chaque zone géographique respective en faisant calculant la valeur de la gaussienne avec la distance entre le centre de chaque zone géographique respective et l'antenne de la cellule de localisation donnée, et en normalisant les quantums de détection résultants de sorte que leur somme vaut 1.

9. Dispositif selon l'une des revendications précédentes, dans lequel le compteur (8) est agencé pour déterminer une valeur de comptage pour chaque zone géographique à partir de la somme, pour chaque cellule de localisation dont la couverture géographique chevauche cette zone géographique, du produit du quantum de détection de cette zone géographique pour cette cellule de localisation par le nombre d'identifiants de dispositifs de téléphonie mobile uniques dans cette cellule de localisation donnée sur une période de temps choisie.

10. Procédé de comptage comprenant les opérations suivantes :
a) recevoir un ensemble de données de zones géographiques formant ensemble un maillage d'un espace géographique, des données de cellule de localisation de téléphonie mobile associant un identifiant de cellule de localisation, un emplacement de cellule de localisation et une couverture géographique de cellule de localisation, et déterminer pour une cellule de localisation donnée une ou plusieurs zones géographiques chevauchant la couverture géographique de la cellule de localisation donnée, la couverture géographique de chaque cellule de localisation donnée étant modifiée en déterminant un rayon effectif à partir de la densité de cellules de localisation autour de la cellule de localisation donnée, et pour calculer pour chaque zone géographique un quantum de détection,
b) recevoir des données de signalisation de téléphonie mobile associant à chaque fois un identifiant de téléphonie mobile, un identifiant de cellule de localisation et un marqueur de temps, et pour déterminer, pour une plage de temps donnée, un comptage de dispositifs de téléphonie mobile pour chaque zone géographique à partir des données de signalisation de téléphonie mobile et du ou des quantums de détection associés à chaque zone géographique.

11. Procédé selon la revendication 10, dans lequel l'opération a) comprend déterminer un rapport respectif entre une surface de chevauchement entre chaque zone géographique respective et la couverture géographique de la cellule de localisation donnée et la surface de la couverture géographique de la cellule de localisation donnée, et affecter à chaque zone géographique respective un quantum de détection égal au rapport respectif.

12. Procédé selon la revendication 10, dans lequel l'opération a) comprend modifier la couverture géographique sous la forme d'un lobe sensiblement ovale principal et d'un lobe sensiblement ovale secondaire, tous deux présentant une extrémité au niveau de l'antenne de la cellule de localisation et étant sensiblement symétriques par rapport à un axe principal d'émission de cette antenne, et tels que le lobe principal est disposé du côté d'émission principal de cette antenne et est plus grand que le lobe secondaire, pour déterminer un rapport respectif entre une surface de chevauchement entre chaque zone géographique respective et la couverture géographique modifiée et la surface de la couverture géographique modifiée, et affecter à chaque zone géographique respective un quantum de détection égal au rapport respectif.

13. Procédé de comptage selon la revendication 10 dans lequel l'opération a) comprend déterminer le quantum de détection de chaque zone géographique respective à partir d'une ou plusieurs distributions de présence probabiliste caractérisant la distance et/ou l'angle de la zone géographique respective par rapport à la couverture géographique de la cellule de localisation donnée.

14. Programme comprenant des instructions mettre en œuvre le procédé selon l'une des revendications 10 à 13 lorsque ledit programme d'ordinateur est exécuté sur un ordinateur.

## Patentansprüche

1. Zählvorrichtung, umfassend einen Speicher (4), der so angeordnet ist, dass er einen Satz von Daten von geografischen Gebieten, die zusammen ein Netz eines geografischen Raums bilden, und Mobilfunk-Ortungszellendaten empfängt, die eine Ortungszellen-ID, einen Ortungszellenstandort und eine geografische Abdeckung von Ortungszellen miteinander verbinden, einen Anonymisierer (6), der so angeordnet ist, dass er für eine gegebene Ortungszelle ein oder mehrere geografische Gebiete bestimmt, die sich mit der geografischen Abdeckung der gegebenen Ortungszelle überlappen, und für jedes geografische Gebiet ein Detektionsquantum berechnet, und einen Zähler (8), der so angeordnet ist, dass er Mobilfunksignaldaten empfängt, die jedes Mal eine Mobilfunk-ID, eine Ortungszellen-ID und einen Zeitstempel miteinander verbinden, und für einen gegebenen Zeitbereich eine Zählung von Mobilfunkvorichtungen für jedes geografische Gebiet aus den Mobilfunksignalisierungsdaten und dem oder den Detektionsquanten, die mit jedem geografischen Gebiet verbunden sind, bestimmt, **dadurch gekennzeichnet, dass** der Anonymisierer (6) so angeordnet ist, dass er die geografische Abdeckung jeder gegebenen Ortungszelle ändert, indem er einen effektiven Radius aus der Dichte von Ortungszellen um die gegebene Ortungszelle herum bestimmt.

2. Zählvorrichtung nach Anspruch 1, wobei der Anonymisierer (6) so angeordnet ist, dass er für eine gegebene Ortungszelle ein geografisches Gebiet, das die Antenne der Ortungszelle enthält oder der den geschätzten Schwerpunkt der geografischen Abdeckung der über die Sendeleistung gewichteten Ortungszelle enthält, mit einem Detektionsquantum gleich 1 und für die anderen geografischen Gebiete mit einem Detektionsquantum gleich 0 verbindet.

3. Zählvorrichtung nach Anspruch 1, wobei der Anonymisierer (6) so angeordnet ist, dass er für eine gegebene Ortungszelle ein jeweiliges Verhältnis zwischen einer Überlappungsfläche zwischen jedem jeweiligen geografischen Gebiet und der geografischen Abdeckung der gegebenen Ortungszelle und der Fläche der geografischen Abdeckung der gegebenen Ortungszelle bestimmt und jedem jeweiligen geografischen Gebiet ein Detektionsquantum zuweist, das dem jeweiligen Verhältnis gleich ist.

4. Vorrichtung nach Anspruch 1, wobei der Anonymisierer (6) so angeordnet ist, dass er für eine gegebene Ortungszelle die geografische Abdeckung in Form einer im Wesentlichen ovalen Hauptkeule und einer im Wesentlichen ovalen Sekundärkeule ändert, wobei beide ein Ende auf Höhe der Antenne der Ortungszelle aufweisen und in Bezug auf eine Hauptsendeachse der Antenne im Wesentlichen symmetrisch sind, und so, dass die Hauptkeule auf der Hauptsendeseite der Antenne angeordnet ist und größer als die Sekundärkeule ist, um ein jeweiliges Verhältnis zwischen einer Überlappungsfläche zwischen jedem jeweiligen geografischen Gebiet und der geänderten geografischen Abdeckung und der Oberfläche der geänderten geografischen Abdeckung zu bestimmen, und jedem jeweiligen geografischen Gebiet ein Detektionsquantum zuweist, das dem jeweiligen Verhältnis gleich ist.

5. Zählvorrichtung nach Anspruch 1, wobei der Anonymisierer (6) so angeordnet ist, dass er für eine gegebene Ortungszelle das Detektionsquantum jedes jeweiligen geografischen Gebiets aus einer oder mehreren probabilistischen Präsenzverteilungen bestimmt, die die Entfernung und/oder den Winkel des jeweiligen geografischen Gebiets in Bezug auf die geografische Abdeckung der gegebenen Ortungszelle charakterisieren.

6. Zählvorrichtung nach Anspruch 5, wobei der Anonymisierer (6) so angeordnet ist, dass er zwei Gauß-Verteilungen bestimmt, jede entlang einer jeweiligen Achse des geografischen Raums und mit Parametern, die von der geografischen Abdeckung der gegebenen Ortungszelle abhängen, und dass er das Detektionsquantum jedes jeweiligen geografischen Gebiets bestimmt, indem das Produkt der angewendeten Gauß-Verteilungen mit den Koordinaten des Zentrums jedes jeweiligen geografischen Gebiets gebildet wird.

7. Zählvorrichtung nach Anspruch 5, wobei der Anonymisierer (6) so angeordnet ist, dass er zwei Gauß-Verteilungen bestimmt, jede entlang einer jeweiligen Achse des geografischen Raums und mit Parametern, die von der geografischen Abdeckung der gegebenen Ortungszelle abhängen, und dass er das Detektionsquantum jedes jeweiligen geografischen Gebiets bestimmt, indem das Produkt des Integrals der Gauß-Verteilungen über den Teil jedes jeweiligen geografischen Gebiets, der die geografische Abdeckung der gegebenen Ortungszelle überlappt, gebildet wird.

8. Zählvorrichtung nach Anspruch 5, wobei der Anonymisierer (6) so angeordnet ist, dass er eine Gauß-Verteilung mit Parametern bestimmt, die von der geografischen Abdeckung der gegebenen Ortungszelle abhängen, und dass er das Detektionsquantum jedes jeweiligen geografischen Gebiets bestimmt, indem der Wert der Gauß-Verteilung mit dem Abstand zwischen dem Zentrum jedes jeweiligen geografischen Gebiets und der Antenne der gegebenen Ortungszelle berechnet wird und indem die resultierenden Detektionsquanten so normalisiert werden, dass ihre Summe 1 ist.

9. Vorrichtung nach einem der vorhergehenden Ansprüche, wobei der Zähler (8) so angeordnet ist, dass er einen Zählwert für jedes geografische Gebiet aus der Summe, für jede Ortungszelle, deren geografische Abdeckung das geografische Gebiet überlappt, des Produkts des Detektionsquantums dieses geografischen Gebiets für diese Ortungszelle mit der Anzahl der eindeutigen Mobilfunkgeräte-IDs in dieser gegebenen Ortungszelle über einen ausgewählten Zeitraum bestimmt.

10. Zählverfahren, das die folgenden Schritte umfasst:
a) Empfangen eines Datensatzes von geografischen Gebieten, die zusammen ein Netz eines geografischen Raums bilden, und Mobilfunk-Ortungszellendaten, die eine Ortungszellen-ID, einen Ortungszellenstandort und eine geografische Abdeckung von Ortungszellen miteinander verbinden, und Bestimmen, für eine gegebene Ortungszelle, eines oder mehrerer geografischen Gebiete, die sich mit der geografischen Abdeckung der gegebenen Ortungszelle überlappen, wobei die geografische Abdeckung jeder gegebenen Ortungszelle geändert wird, indem ein effektiver Radius aus der Dichte von Ortungszellen um die gegebene Ortungszelle herum bestimmt wird, und Berechnen eines Detektionsquantums für jedes geografische Gebiet,
b) Empfangen von Mobilfunksignaldaten, die jedes Mal eine Mobilfunk-ID, eine Ortungszellen-ID und einen Zeitstempel miteinander verbinden, und Bestimmen, für einen gegebenen Zeitbereich, einer Zählung von Mobilfunkvorrichtungen für jedes geografische Gebiet aus den Mobilfunksignalisierungsdaten und dem oder den Detektionsquanten, die mit jedem geografischen Gebiet verbunden sind.

11. Verfahren nach Anspruch 10, wobei der Schritt a) das Bestimmen eines jeweiligen Verhältnisses zwischen einer Überlappungsfläche zwischen jedem jeweiligen geografischen Gebiet und der geografischen Abdeckung der gegebenen Ortungszelle und der Fläche der geografischen Abdeckung der gegebenen Ortungszelle umfasst, und das Zuweisen eines Detektionsquantums, das dem jeweiligen Verhältnis gleich ist, zu jedem jeweiligen geografischen Gebiet.

12. Verfahren nach Anspruch 10, wobei der Schritt a) das Ändern der geografischen Abdeckung in Form einer im Wesentlichen ovalen Hauptkeule und einer im Wesentlichen ovalen Sekundärkeule umfasst, wobei beide ein Ende auf Höhe der Antenne der Ortungszelle aufweisen und in Bezug auf eine Hauptsendeachse der Antenne im Wesentlichen symmetrisch sind, und so, dass die Hauptkeule auf der Hauptsendeseite der Antenne angeordnet ist und größer als die Sekundärkeule ist, um ein jeweiliges Verhältnis zwischen einer Überlappungsfläche zwischen jedem jeweiligen geografischen Gebiet und der geänderten geografischen Abdeckung und der Oberfläche der geänderten geografischen Abdeckung zu bestimmen, und das Zuweisen eines Detektionsquantums, das dem jeweiligen Verhältnis gleich ist, zu jedem jeweiligen geografischen Gebiet umfasst.

13. Zählverfahren nach Anspruch 10, wobei der Schritt a) das Bestimmen des Detektionsquantums jedes jeweiligen geografischen Gebiets aus einer oder mehreren probabilistischen Präsenzverteilungen umfasst, die die Entfernung und/oder den Winkel des jeweiligen geografischen Gebiets in Bezug auf die geografische Abdeckung der gegebenen Ortungszelle charakterisieren.

14. Programm, das Anweisungen zum Durchführen des Verfahrens nach einem der Ansprüche 10 bis 13 umfasst, wenn das Computerprogramm auf einem Computer ausgeführt wird.

## Claims

1. Counting device comprising a memory (4) arranged to receive a set of data in relation to geographical areas together forming a grid of a geographical space, mobile telephony location cell data associating a location cell identifier, a location cell position and a location cell geographical coverage, an anonymizer (6) arranged to determine, for a given location cell, one or more geographical areas overlapping the geographical coverage of the given location cell, and to compute a detection quantum for each geographical area, and a counter (8) arranged to receive mobile telephony signaling data associating, each time, a mobile telephony identifier, a location cell identifier and a time marker, and to determine, for a given time range, a count of mobile telephony devices for each geographical area based on the mobile telephony signaling data and the one or more detection quantums associated with each geographical area, **characterized in that** the anonymizer (6) is arranged to modify the geographical coverage of each given location cell by determining an effective radius based on the density of location cells around the given location cell.

2. Counting device according to claim 1 wherein the anonymizer (6) is arranged, for a given location cell, to associate a detection quantum equal to 1 with a geographical area that contains the antenna of the location cell, or that contains the estimated barycenter of the geographical coverage of the location cell weighted by the transmission power, and a detection quantum equal to 0 for the other geographical areas.

3. Counting device according to claim 1 wherein the anonymizer (6) is arranged, for a given location cell, to determine a respective ratio between an overlapping surface between each respective geographical area and the geographical coverage of the given location cell and the surface of the geographical coverage of the given location cell, and to assign to each respective geographical area a detection quantum equal to the respective ratio.

4. Device according to claim 1, wherein the anonymizer (6) is arranged, for a given location cell, to modify the geographical coverage in the form of a main substantially oval lobe and of a secondary substantially oval lobe, both having one end at the antenna of the location cell and being substantially symmetrical in relation to a main emission axis of this antenna, and such that the main lobe is disposed on the main emission side of this antenna and is larger than the secondary lobe, to determine a respective ratio between an overlapping surface between each respective geographical area and the modified geographical coverage and the surface of the modified geographical coverage, and to assign to each respective geographical area a detection quantum equal to the respective ratio.

5. Counting device according to claim 1 wherein the anonymizer (6) is arranged, for a given location cell, to determine the detection quantum of each respective geographical area based on one or more probabilistic presence distributions characterizing the distance and/or the angle of the respective geographical area in relation to the geographical coverage of the given location cell.

6. Counting device according to claim 5, wherein the anonymizer (6) is arranged to determine two Gaussians, each according to a respective axis of the geographical space and with parameters depending on the geographical coverage of the given location cell, and to determine the detection quantum of each respective geographical area by calculating the product of these Gaussians applied with the coordinates of the center of each respective geographical area.

7. Counting device according to claim 5, wherein the anonymizer (6) is arranged to determine two Gaussians, each according to a respective axis of the geographical space and with parameters depending on the geographical coverage of the given location cell, and to determine the detection quantum of each respective geographical area by calculating the product of the integral of these Gaussians on the portion of each respective geographical area overlapping the geographical coverage of the given location cell.

8. Counting device according to claim 5, wherein the anonymizer (6) is arranged to determine a Gaussian with parameters depending on the geographical coverage of the given location cell, and to determine the detection quantum of each respective geographical area by computing the value of the Gaussian with the distance between the center of each respective geographical area and the antenna of the given location cell, and by normalizing the resulting detection quantums so that their sum is 1.

9. Device according to one of the preceding claims, wherein the counter (8) is arranged to determine a count value for each geographical area based on the sum, for each location cell the geographical coverage of which overlaps this geographical area, of the product of the detection quantum of this geographical area for this location cell by the number of unique mobile telephony device identifiers in this given location cell over a chosen time period.

10. Counting method comprising the following operations:
a) receiving a set of data in relation to geographical areas together forming a grid of a geographical space, mobile telephony location cell data associating a location cell identifier, a location cell position and a location cell geographical coverage, and determining for a given location cell, one or more geographical areas overlapping the geographical coverage of the given location cell, the geographical coverage of each given location cell being modified by determining an effective radius based on the density of location cells around the given location cell, and to compute a detection quantum for each geographical area,
b) receiving mobile telephony signaling data associating, each time, a mobile telephony identifier, a location cell identifier and a time marker, and to determine, for a given time range, a count of mobile telephony devices for each geographical area based on the mobile telephony signaling data and the one or more detection quantums associated with each geographical area.

11. Method according to claim 10, wherein the operation a) comprises determining a respective ratio between an overlapping surface between each respective geographical area and the geographical coverage of the given location cell and the surface of the geographical coverage of the given location cell, and assigning to each respective geographical area a detection quantum equal to the respective ratio.

12. Method according to claim 10, wherein the operation a) comprises modifying the geographical coverage in the form of a main substantially oval lobe and of a secondary substantially oval lobe, both having one end at the antenna of the location cell and being substantially symmetrical in relation to a main emission axis of this antenna, and such that the main lobe is disposed on the main emission side of this antenna and is larger than the secondary lobe, to determine a respective ratio between an overlapping surface between each respective geographical area and the modified geographical coverage and the surface of the modified geographical coverage, and assigning to each respective geographical area a detection quantum equal to the respective ratio.

13. Counting method according to claim 10 wherein the operation a) comprises determining the detection quantum of each respective geographical area based on one or more probabilistic presence distributions characterizing the distance and/or the angle of the respective geographical area in relation to the geographical coverage of the given location cell.

14. Program comprising instructions for implementing the method according to one of claims 10 to 13 when said computer program is run on a computer.
